# EUROPÄISCHE PATENTSCHRIFT

(11) **EP 4 242 481 B1**
(45) Veröffentlichungstag und Bekanntmachung des Hinweises auf die Patenterteilung: **20.08.2025**
(21) Anmeldenummer: 23160182.4
(22) Anmeldetag: 06.03.2023
(51) Int. Cl.: F16C 19/00, F16C 33/60, F16C 43/04, F16C 19/38, F16C 33/76, F16J 15/06, F16J 1/00, F16J 15/34

(54) **SEGMENTIERTER WÄLZLAGERRING MIT ABGEDICHTETEN STOSSFUGEN**
SEGMENTED ROLLER BEARING RING WITH SEALED BUTT JOIN
BAGUE DE PALIER À ROULEMENTAVEC JOIN DE BORDURE ÉTANCHE

(30) Priorität: 08.03.2022 BE 202205160; 08.03.2022 DE 102022202322
(43) Veröffentlichungstag der Anmeldung: 13.09.2023
(73) Patentinhaber: thyssenkrupp rothe erde Germany GmbH, 44137 Dortmund (DE); thyssenkrupp AG, 45143 Essen (DE)
(72) Erfinder: Voß, Bernd, 59556 Lippstadt (DE); Gersdorf, Klaus, 59556 Lippstadt - Bad Waldliesborn (DE); Thom, Tobias, 59555 Lippstadt (DE)
(74) Vertreter: thyssenkrupp Intellectual Property GmbH

(56) Entgegenhaltungen:
- DE-A1- 102011 011 163
- DE-A1- 102018 219 757
- DE-A1- 102019 206 040
- US-A1- 2021 131 490

## Beschreibung

### Stand der Technik

Die Erfindung betrifft einen segmentierten Wälzlagerring für ein Großwälzlager nach dem Oberbegriff des Anspruchs 1.

Großwälzlager werden, wenn sie eine gewisse Größe überschreiten und/oder aus Gründen der Montage oder des Transports, segmentweise gefertigt und transportiert. Dies hat eine ganze Reihe von Vorteilen. So gestaltet sich beispielsweise das Handling bei der Produktion und beim Aufbau von Anlagen, welche entsprechende Wälzlager aufweisen, deutlich einfacher.

Durch die Segmentierung entstehen zwischen den Segmenten Stoßfugen und somit Undichtigkeiten durch die beispielsweise Schmutz ins Innere des Wälzlagers gelangen kann. Dadurch wird die Lebensdauer des Wälzlagers negativ beeinflusst. Ferner ist es möglich, dass durch die Stoßfugen Schmiermittel aus dem Inneren des Wälzlagers nach außen dringen kann, was zum einen zu Verschmutzungen führt, die auch umweltschädlich sein können, und zum anderen der Lebensdauer des Wälzlagers ebenfalls abträglich sein kann.

Im Stand der Technik werden die Stoßfugen bei der Endmontage vor Ort deshalb mit Dichtmitteln in Form von aufstreichfähigen Dichtmassen abgedichtet, die in die Stoßfugen eingebracht werden und diese verschließen. Zusätzlich kann eine Dichtmasse am äußeren Bereich der Stoßfugen aufgetragen werden. Während die Dichtwirkung der Dichtmittel bei fettgeschmierten Lagern für einen wartungsarmen Betrieb üblicherweise ausreichend ist, tritt bei ölgeschmierten Wälzlagern eine spürbare Leckage auf. Auch kann die im Betrieb der Wälzlager auftretende Verformung der Wälzlagerringe auf Dauer dazu führen, dass die Dichtwirkung der Dichtmittel nachlässt. Zudem ist nachteilig, dass sich die Dichtmittel nicht zerstörungsfrei und restlos entfernen lassen, da segmentierte Wälzlagerringe zum Teil im Rahmen der Herstellung für einen Probebetrieb und den anschließenden Transport bis zum Montageort montiert und wieder demontiert werden müssen. In einem solchen Probebetrieb ist deshalb mit Undichtigkeiten zu rechnen, da die Wälzlager für die Verbringung an den endgültigen Montageort wieder demontiert werden müssen und eine Abdichtung mit abbindenden bzw. aushärtenden Dichtmitteln daher ausscheidet.

Aus DE 10 2018 219 757 A1 ist daher eine Spaltabdichtung für segmentierte Wälzlager bekannt, bei der in den einander zugewandten Stirnseiten benachbarter Ringsegmente jeweils eine Nut eingebracht ist, die parallel zueinander verlaufen und zusammen eine Aufnahme bilden, wobei in die Aufnahme eine Dichtung eingebracht ist, die durch eine Befestigung in den beiden Nuten vorgespannt ist. Zum Vorspannen der Dichtung in der Aufnahme sind Spannstifte vorgesehen, die beidseits der Dichtung entlang der Haupterstreckungsrichtung der Dichtung in die Aufnahme eingezogen werden und die Dichtung in den beiden Nuten verklemmen. Nachteilig ist, dass es beim Einziehen der Spannstifte zu einem Verrutschen oder einer Beschädigung der Dichtungen kommen kann, was die Dichtwirkung der Spaltabdichtung negativ beeinträchtigt und Montage und Demontage des Wälzlagerrings erschwert.

DE 10 2019 206 040 A1 beschreibt ein Wälzlager, bei dem zumindest der Innenring oder der Außenring in mehrere aufeinanderfolgende umfängliche Ringsegmente geteilt ist. Zwischen jedem Paar von zugewandten Enden der aufeinanderfolgenden Ringsegmente ist ein Ausrichtungselement vorgesehen, das an einem der Enden gesichert ist und in eine auf dem anderen Ende gebildete Ausnehmung auskragt, um das Paar von zugewandten Enden in der radialen und axialen Richtung auszurichten. Das Wälzlager umfasst ferner eine Platte, die den Raum schließt, der zwischen den Enden der Ringsegmente vorgesehen ist. Die Platte bildet lokal eine Laufbahn für die Rollen des Lagers.

DE 10 2011 011 163 A1 beschreibt ein Großwälzlager mit einer Vorrichtung zur Befestigung und Niederhaltung von umlaufenden Dichtungsvorrichtungen.

### Offenbarung der Erfindung

Aufgabe der Erfindung ist es, einen segmentierten Wälzlagerring für ein Großwälzlager anzugeben, bei dem die Dichtwirkung an den Stoßfugen der Segmente verbessert und Montagearbeiten vereinfacht sind.

Diese Aufgabe wird gelöst durch Wälzlagerring für ein Großwälzlager mit den Merkmalen des Anspruchs 1.

Hierdurch wird ein segmentierter Wälzlagerring für ein Großwälzlager mit einer zumindest einem Laufbahnsystem für Wälzkörper zugewandten Innenseite, an der zumindest eine Wälzlagerlaufbahn vorgesehen ist, geschaffen. Der Wälzlagerring ist in Ringsegmente unterteilt, die in Umfangsrichtung unter Ausbildung von Stoßfugen an Stoßseiten aneinander angrenzen und die im Bereich der Stoßfugen mittels streifenförmigen Dichtungen gegeneinander abgedichtet sind. Erfindungsgemäß ist vorgesehen, dass die Stoßfuge zwischen einem ersten und einem zweiten der Ringsegmente an einer von der Innenseite abgewandten Außenseite des Wälzlagerrings von einer der streifenförmigen Dichtungen überdeckt ist. Diese Dichtung ist mittels mindestens eines an dem ersten und/oder dem zweiten Ringsegment verschraubten Klemmblechs gegen die Stoßfuge geklemmt.

Durch die außenseitige Anbringung einer streifenförmigen Dichtung, die die Stoßfuge überdeckt, sieht die Erfindung eine Dichtungsanordnung vor, die aufgrund ihrer abdeckenden Wirkung auch größere Veränderungen der Stoßfugenbreite im Betrieb des Wälzlagers im Bereich von wenigen Millimetern, beispielsweise aufgrund von Verformungen des Lagerrings, ausgleichen kann. Die streifenförmige Dichtung liegt mit ihren längsseitigen Randbereichen beidseitig der Stoßfuge auf den Ringsegmenten auf und deckt mit einem mittleren Bereich die Stoßfuge ab. Das Klemmblech bewirkt eine Klemmung der Randbereiche der Dichtung auf die Ringsegmente, während Veränderungen der Stoßfugenbreite durch die Flexibilität der Dichtung im mittleren Bereich ausgeglichen werden können. Je nach Ausführung und vorgesehener Klemmung ist auch eine gewisse Bewegung der Dichtung bei reduzierter oder einseitiger Klemmung möglich. Im Unterschied dazu sind bei einer in der Stoßfuge verpressten Dichtung die ausgleichbaren Änderungen der Stoßfugenbreite durch den maximalen Kompressionsgrad der Dichtmasse begrenzt.

Durch die Befestigung der Dichtung mittels des außenseitig verschraubten Klemmblechs, lässt sich die Dichtung auf einfache Weise montieren und zerstörungsfrei demontieren. Die Dichtungen können somit sowohl für einen Probebetrieb temporär montiert werden, als auch im Feld zu Wartungszwecken einfach demontiert und ersetzt werden. Dadurch dass die Verschraubung des Klemmblechs vorzugsweise außerhalb eines abdichtenden Bereichs der Dichtung erfolgt, ist das Risiko einer Beschädigung der Dichtung bei der Montage und Demontage reduziert.

In einer bevorzugten Ausführungsform erstreckt sich das Klemmblech über die Stoßfuge und ist beidseitig der Stoßfuge mit dem ersten und dem zweiten Ringsegment verschraubt. Diese Ausführungsform eignet sich besonders für Lager, bei denen die zu erwartenden Lasten nur zu geringfügigen Veränderungen der Stoßfugenbreite führen. Größere Veränderungen der Stoßfugenbreite können trotz beidseitiger Verschraubung des Klemmblechs beispielsweise durch Verschraubung in sich quer zur Stoßfuge erstreckenden Langlöchern des Klemmblechs ausgeglichen werden.

In einer alternativen Ausführungsform ist das Klemmblech nur einseitig der Stoßfuge mit dem ersten Ringsegment verschraubt und erstreckt sich zumindest teilweise über die Stoßfuge. Durch die nur einseitige Verschraubung des Klemmblechs ist der Montageaufwand für die Dichtung reduziert.

In einer weiteren alternativen Ausführungsform sind zwei Klemmbleche vorgesehen, die an dem ersten und entsprechend an dem zweiten Ringsegment verschraubt sind und die einander zugewandte Ränder aufweisen, die komplementär zueinander ausgebildet und unter Einschluss einer Dehnungsfuge angeordnet sind. Die Dehnungsfuge zwischen den Klemmblechen erlaubt eine unbegrenzte Relativbewegung der Klemmbleche quer zur Stoßfuge zueinander, bei der die Dichtung durch die beidseitige Verschraubung zugleich sicher geklemmt ist.

Die Dehnungsfuge weist vorzugsweise einen geradlinigen oder wellenförmigen Verlauf auf. Ein geradliniger Verlauf hat den Vorteil der besonders einfachen Fertigung und Montage der Klemmbleche. Bei einem wellenförmigen Verlauf wird die streifenförmige Dichtung im Bereich der Stoßfuge abwechselnd von dem einen und dem anderen Klemmblech überdeckt. Dadurch wird das Risiko eines Einklemmens der Dichtung in der Dehnungsfuge unter den Bewegungen der Ringsegmente zueinander reduziert.

Hinsichtlich der Befestigung der Dichtung ist es vorteilhaft, wenn die streifenförmige Dichtung Löcher und/oder randseitige Ausnehmungen aufweist, durch die sich Befestigungsschrauben des mindestens einen Klemmblechs erstrecken. Dadurch wird im unmittelbaren Umfeld der Befestigungsschrauben ein Anpressdruck auf die Dichtung ausgeübt, der die randseitige Abdichtung der Stoßfuge sicherstellt.

In bevorzugten alternativen Ausführungsformen steht das mindestens eine Klemmblech mit einem Randbereich seitlich über die streifenförmige Dichtung vor und ist in dem Randbereich mit dem ersten und/oder zweiten Ringsegment verschraubt. Bei dieser Bauweise ist die Positionierung der Dichtung vereinfacht und es besteht kein Risiko, die Dichtung durch die Verschraubung zu beschädigen.

Bevorzugt ist vorgesehen, dass das erste und das zweite Ringsegment benachbart zur Stoßfuge jeweils eine außenseitige Nut aufweisen, in denen das mindestens eine Klemmblech zumindest teilweise versenkt angeordnet ist. Durch die versenkte Anordnung des Klemmblechs werden außenseitig überstehende Teile der Dichtungsanordnung verringert, wodurch der Einbau des abgedichteten Wälzlagerrings in eine Anschlusskonstruktion vereinfacht sein kann.

Ferner kann vorgesehen sein, dass die streifenförmige Dichtung und/oder das mindestens eine Klemmblech in Richtung der Stoßfuge mehrteilig ausgebildet sind. Durch die mehrteilige Überdeckung der Stoßfuge kann die Dichtungsanordnung für Erstreckung und Geometrie der Stoßfuge modular angepasst werden. Beispielsweise können besonders lange Stoßfugen oder Ecken und Kanten im Verlauf der Stoßfuge durch mehrere, standardisierbare Klemmblechelemente überdeckt werden. So können Stoßfugen axial und/oder radial abgedichtet werden und auch solche Stoßfugen überdeckt werden, die im Verlauf unterschiedliche Querschnitte oder Geometrien aufweisen.

Weitere vorteilhafte Ausführungsformen sind der nachfolgenden Beschreibung und den Unteransprüchen zu entnehmen.

Die Erfindung wird nachstehend anhand der in den beigefügten Abbildungen dargestellten Ausführungsbeispiele näher erläutert.

### Kurzbeschreibung der Zeichnungen

- Fig. 1: zeigt schematisch eine geschnittene Darstellung eines Großwälzlagers mit segmentierten Wälzlagerringen nach einem ersten Ausführungsbeispiel der Erfindung mit einer Schnittebene im Bereich eines radialen Laufbahnsystems,
- Fig. 2: zeigt schematisch das Großwälzlager nach Fig. 1 im Querschnitt, wobei die Schnittebene einem Segmentstoß des Außenrings entspricht,
- Fig. 3A bis 3E: zeigen schematisch fünf verschiedene Ausführungsformen für die Anordnung von Dichtungen und Klemmblechen im Bereich der Stoßfugen, jeweils im Querschnitt und in einer Draufsicht,
- Fig. 4: zeigt schematisch eine geschnittene Darstellung eines Großwälzlagers mit segmentierten Wälzlagerringen nach einem zweiten Ausführungsbeispiel der Erfindung, wobei die Schnittebene dem Segmentstoß eines als Haltering ausgebildeten Wälzlagerrings entspricht.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

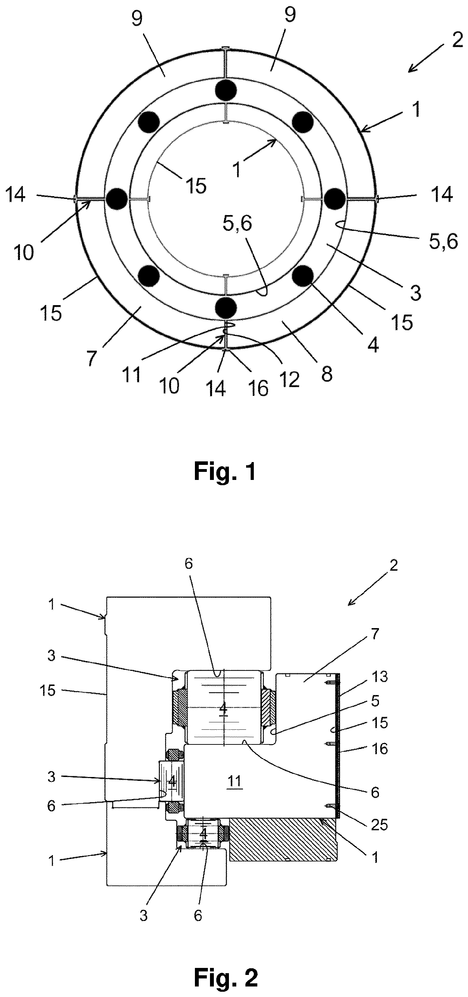

In **Fig. 1** ist ein Großwälzlager 2 in einer geschnittenen Darstellung schematisch dargestellt. Die Schnittebene verläuft senkrecht zur Lagerachse durch ein radiales Laufbahnsystem des Großwälzlagers 2. Das Großwälzlager 2 hat vorzugsweise einen Innendurchmesser von mindestens 300 mm bis 3000mm, besonders bevorzugt von mindestens 2000 mm. Das in Fig. 1 gezeigte Großwälzlager 2 umfasst einen segmentierten Innen- und einen segmentierten Außenring als Wälzlagerringe 1.

In **Fig. 2** ist ein Radialschnitt durch das Großwälzlager 2 gemäß Fig. 1 gezeigt. Der Außenring ist einteilig als Nasenring ausgebildet, während der Innenring unterteilt ist in einen oberen Tragring und in einen unteren Haltering, die den Nasenring unter Einschluss von zwei axialen und einem radialen Laufbahnsystem 3 umschließen. Jeder der drei Ringe, Nasenring, Tragring und Haltering, bildet einen erfindungsgemäßen segmentierten Wälzlagerring 1, der nachfolgend mit Bezug auf Fig. 1 und 2 am Beispiel des Außenrings näher beschrieben wird. Die erfindungsgemäße Lehre ist unabhängig von der konkreten geometrischen Form und Anzahl der in einem Wälzlager verbauten Wälzlagerringe. Sie lässt sich analog auf Wälzlagerringe eines Wälzlagers mit nur zwei oder auch mehr als drei Wälzlagerringen anwenden.

Der erfindungsgemäße segmentierte Wälzlagerring 1 für ein Großwälzlager 2 weist eine den Laufbahnsystemen 3 für die Wälzkörper 4 zugewandte Innenseite 5 auf. Die Innenseite 5 erstreckt sich in Fig. 2 über sämtliche Flächen, die einem der drei Laufbahnsysteme 3 zugewandt sind. An der Innenseite 5 sind somit auch die drei Wälzlagerlaufbahnen 6 für die drei Reihen von Wälzkörpern 4 ausgebildet.

Der Wälzlagerring 1 ist in Ringsegmente 7, 8, 9 unterteilt (vgl. Fig. 1), die in Umfangsrichtung unter Ausbildung von Stoßfugen 10 an Stoßseiten 11, 12 aneinander angrenzen. In Fig. 2 liegt die Stoßseite 11 des Ringelements 7 in der dargestellten Schnittebene. Im Bereich der Stoßfugen 10 sind die Ringsegmente 7, 8, 9 mittels streifenförmigen Dichtungen 13, 14 gegeneinander abgedichtet. Wie aus Fig. 2 in Verbindung mit Fig. 1 ersichtlich ist die Stoßfuge 10 zwischen dem ersten 7 und dem zweiten 8 der Ringsegmente 7, 8, 9 an einer von der Innenseite 5 abgewandten Außenseite 15 des Wälzlagerrings 1 von einer 13 der streifenförmigen Dichtungen 13, 14 überdeckt. Die Dichtung 13 ist dabei mittels eines an dem ersten 7 und/oder dem zweiten Ringsegment 8 verschraubten Klemmblechs 16 gegen die Stoßfuge 10 geklemmt. Die streifenförmige Dichtung liegt in längsseitigen Randbereichen auf beiden Seiten der Stoßfuge 10 auf dem ersten und zweiten Ringsegment 7, 8 auf, welche die Dichtflächen bilden. Bevorzugt ist vorgesehen, dass diese Dichtflächen eine Breite von jeweils mindestens 2 mm aufweisen. Die Dichtung kann beispielsweise aus Nitrilkautschuk (NBR), Fluorkautschuk (FKM) oder Silikon hergestellt sein.

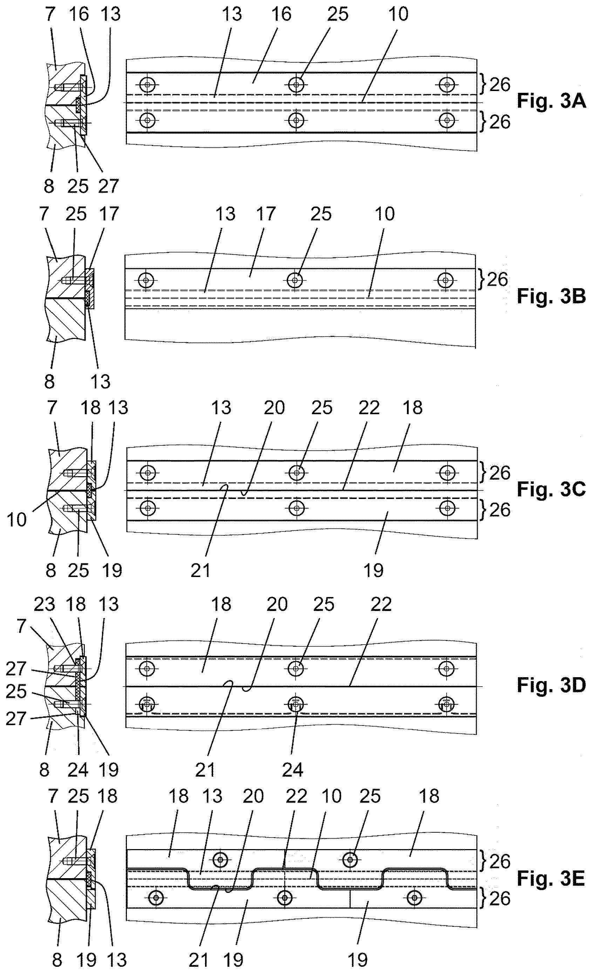

Verschiedene Ausführungsformen der Dichtungsanordnung, wie sie in den segmentierten Wälzlagerringen 1 gemäß Fig. 1 und 2 Anwendungen finden können, sind überblicksartig in Fig. 3A bis 3E dargestellt.

**Fig. 3A** ist ein Ausführungsbeispiel gezeigt, bei dem sich das Klemmblech 16 über die Stoßfuge 10 erstreckt und beidseitig der Stoßfuge 10 mit dem ersten und dem zweiten Ringsegment 7, 8 verschraubt ist. Das Klemmblech 16 steht beidseitig mit einem Randbereich 26 seitlich über die streifenförmige Dichtung 13 vor und ist in den Randbereichen 26 mit dem ersten 7 und dem zweiten Ringsegment 8 verschraubt. Die Verschraubung erfolgt mittels Befestigungsschrauben 25, die in Gewindebohrungen in den Ringsegmenten 7, 8 eingreifen. Wie in Fig. 3A gezeigt sind die Schraubenköpfe vorzugsweise in dem Klemmblech 16 versenkt.

In dem in Fig. 3A gezeigten Ausführungsbeispiel weisen das erste und das zweite Ringsegment 7, 8 benachbart zur Stoßfuge 10 jeweils eine außenseitige Nut 27 auf, in denen das Klemmblech 16 teilweise versenkt angeordnet ist. Ebenso wäre eine vollständige Versenkung des Klemmblechs in der Nut denkbar. Zur Aufnahme der streifenförmigen Dichtung 13 ist eine benachbart zur Stoßfuge 10 jeweils eine weitere außenseitige Nut in das erste und das zweite Ringsegment 7, 8 eingebracht. Die Nut weist eine geringere Tiefe als die Dichtung 13 im unbelasteten Zustand auf, so dass die Dichtung 13 bei der Montage des Klemmblechs 16 in der Nut gegen die Stoßfuge 10 verklemmt wird.

In **Fig. 3B** ist ein Ausführungsbeispiel gezeigt, bei dem das Klemmblech 17 nur einseitig der Stoßfuge 10 mit dem ersten Ringsegment 7 verschraubt ist und sich über die Stoßfuge 10 erstreckt. Für die Aufnahme der streifenförmigen Dichtung 13 ist eine Nut im Klemmblech 17 vorgesehen. Aufgrund der nur einseitigen Verschraubung des Klemmblechs 17 kommt die Dichtungsanordnung mit einer halbierten Anzahl von Befestigungsschrauben 25 aus.

In **Fig. 3C** ist ein Ausführungsbeispiel mit zwei Klemmblechen 18, 19 gezeigt, die an dem ersten Ringsegment 7 und entsprechend an dem zweiten Ringsegment 8 verschraubt sind. Die Klemmbleche 18, 19 haben einander zugewandte Ränder 20, 21 aufweisen, die komplementär zueinander ausgebildet und unter Einschluss einer Dehnungsfuge 22 angeordnet sind. Die Dehnungsfuge 22 ist hier beispielhaft geradlinig ausgebildet. Wie in den Figuren 3A and 3B stehen die Klemmbleche 18, 19 beidseitig der Stoßfuge 10 mit einem Randbereich 26 seitlich über die streifenförmige Dichtung 13 vor und sind in den Randbereichen 26 mit dem ersten 7 und dem zweiten Ringsegment 8 verschraubt. In Fig. 3C ist die Dichtungsanordnung eine reine Aufschraubkonstruktion. Die hat den Vorteil, dass keinerlei zusätzliche Nuten in die Ringsegmente 7, 8 eingebracht werden müssen, um die Dichtung und/oder die Klemmbleche 18, 19 aufzunehmen, wodurch der Herstellungsaufwand reduziert ist.

Das in **Fig. 3D** gezeigte Ausführungsbeispiel unterscheidet sich von Fig. 3C dadurch, dass die streifenförmige Dichtung 13 Löcher 23 und randseitige Ausnehmungen 24 aufweist, durch die sich Befestigungsschrauben 25 der Klemmbleche 18, 19 erstrecken. Die Dichtung 13 ist folglich so breit ausgebildet, dass sie sich bis in den Bereich der Verschraubung erstreckt und dort unmittelbar durch die Wirkung der Schraubenkraft geklemmt ist. Ferner sind Dichtung 13 und Klemmbleche 18, 19 in Fig. 3D im Unterschied zu Fig. 3C in außenseitigen Nuten der Ringsegmente 7, 8 zumindest teilweise versenkt.

Schließlich ist in **Fig. 3E** ein Ausführungsbeispiel gezeigt, bei dem die Dehnungsfuge 22 einen wellenförmigen, beispielsweise Z-förmigen, Verlauf aufweist. Auch sind die streifenförmige Dichtung 13 und die Klemmbleche 18, 19 in Richtung der Stoßfuge 10 mehrteilig ausgebildet. Im Übrigen gelten die Ausführungen zu Fig. 3C entsprechend.

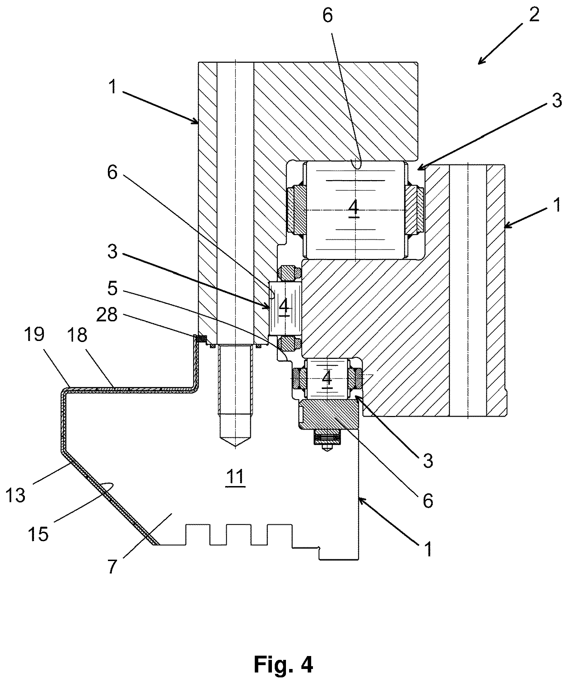

In **Fig. 4** ist ein zweites Ausführungsbeispiel der Erfindung gezeigt. Das geschnitten dargestellte Großwälzlager 2 weist im Unterschied zu dem Ausführungsbeispiel gemäß Fig. 1 und 2 einen als sog. Haltering ausgebildeten Wälzlagerring 1 mit einer nicht-zylindrischen, profilierten Kontur der Außenseite 15 auf. Derartige Außenkonturen dienen der verbesserten Anpassung des Lagers 2 an die Anschlusskonstruktion, in die das Lager 2 bestimmungsgemäß eingebaut wird.

Wie in Fig. 4 dargestellt, folgt die an das Ringsegment 7 angrenzende Stoßfuge der Kontur der Außenseite 15 und weist daher mehrere Ecken und Kanten in ihrem Verlauf auf. Zur erfindungsgemäßen Abdichtung einer solchen Stoßfuge kommen Klemmbleche 18, 19 zur Anwendung, welche der profilierten Kontur der Außenseite 15 des Ringsegments 7 angepasst sind.

Die Klemmbleche 18, 19 und/oder die streifenförmige Dichtung 13 können dazu in Richtung der Stoßfuge mehrteilig ausgebildet sein. Durch die mehrteilige Überdeckung der Stoßfuge kann die Dichtungsanordnung an die Erstreckung und Geometrie der Stoßfuge modular angepasst werden. Beispielsweise können standardisierte Eckelemente für typische Eckwinkel, wie beispielsweise 45°, 60° oder 90°, eingesetzt werden.

Als Abschlusselement der Stoßfuge kann es vorteilhaft sein, einen Dichtungsstopfen 28 vorzusehen, der in den Endbereich der Stoßfuge eingreift und die Stoßfuge gegenüber einem quer zur Stoßfuge angrenzenden Bauteil zusätzlich abdichtet. Ein solcher Dichtungsstopfen 28 ist in Fig. 4 beispielhaft dargestellt in dem Grenzbereich zwischen dem unteren Haltering und dem oberen Tragring des Großwälzlagers 2.

Ein weiterer Unterschied zu dem ersten Ausführungsbeispiel besteht darin, dass die an dem als Haltering ausgebildeten Wälzlagerring 1 vorgesehene Wälzlagerlaufbahn 6 als ein separates Bauteil ausgebildet ist, welches in den Wälzlagerring 1 eingelegt ist. Beispielsweise können dann durchgehärtete Laufbahnen in einem Wälzlagerring 1 eingesetzt werden, dessen Material schlechtere Härteeigenschaften aufweist. Außerdem besteht die Möglichkeit, wie in Fig. 4 dargestellt, die Wälzlagerlaufbahn 6 gegen die Wälzkörper 4 federbelastet vorzuspannen.

Im Übrigen gelten die Ausführungen zu dem in den Fig. 1 bis 3 dargestellten Ausführungsbeispiel für das zweite Ausführungsbeispiel gemäß Fig. 4 entsprechend.

### Bezugszeichenliste

- 1: Wälzlagerring
- 2: Großwälzlager
- 3: Laufbahnsystem
- 4: Wälzkörper
- 5: Innenseite
- 6: Wälzlagerlaufbahn
- 7, 8, 9: Ringsegmente
- 10: Stoßfuge
- 11, 12: Stoßseiten
- 13, 14: Dichtungen
- 15: Außenseite
- 16, 17, 18, 19: Klemmblech
- 20, 21: einander zugewandte Ränder der Klemmbleche
- 22: Dehnungsfuge
- 23: Loch
- 24: Ausnehmung
- 25: Befestigungsschraube
- 26: Randbereich
- 27: Nut
- 28: Dichtungsstopfen

## Patentansprüche

1. Segmentierter Wälzlagerring für ein Großwälzlager (2) mit einer zumindest einem Laufbahnsystem (3) für Wälzkörper (4) zugewandten Innenseite (5), an der zumindest eine Wälzlagerlaufbahn (6) vorgesehen ist, wobei der Wälzlagerring (1) in Ringsegmente (7, 8, 9) unterteilt ist, die in Umfangsrichtung unter Ausbildung von Stoßfugen (10) an Stoßseiten (11, 12) aneinander angrenzen und die im Bereich der Stoßfugen (10) mittels streifenförmigen Dichtungen (13, 14) gegeneinander abgedichtet sind, **dadurch gekennzeichnet, dass** die Stoßfuge (10) zwischen einem ersten (7) und einem zweiten (8) der Ringsegmente (7, 8, 9) an einer von der Innenseite (5) abgewandten Außenseite (15) des Wälzlagerrings (1) von einer (13) der streifenförmigen Dichtungen (13, 14) überdeckt ist, wobei diese streifenförmige Dichtung (13) mit ihren längsseitigen Randbereichen beidseitig der Stoßfuge (10) auf den Ringsegmenten (7, 8) aufliegt und die Stoßfuge (10) mit einem mittleren Bereich abdeckt und die Dichtung (13) mittels mindestens eines an dem ersten (7) und/oder dem zweiten Ringsegment (8) verschraubten Klemmblechs (16, 17, 18, 19) gegen die Stoßfuge (10) geklemmt ist.

2. Segmentierter Wälzlagerring nach Anspruch 1, **dadurch gekennzeichnet, dass** das sich das Klemmblech (16) über die Stoßfuge (10) erstreckt und beidseitig der Stoßfuge (10) mit dem ersten und dem zweiten Ringsegment (7, 8) verschraubt ist.

3. Segmentierter Wälzlagerring nach Anspruch 1, **dadurch gekennzeichnet, dass** das Klemmblech (17, 18, 19) nur einseitig der Stoßfuge (10) mit dem ersten Ringsegment (7) verschraubt ist und sich zumindest teilweise über die Stoßfuge (10) erstreckt.

4. Segmentierter Wälzlagerring nach Anspruch 1 oder 3, **dadurch gekennzeichnet, dass** zwei Klemmbleche (18, 19) vorgesehen sind, die an dem ersten (7) und entsprechend an dem zweiten Ringsegment (8) verschraubt sind und die einander zugewandte Ränder (20, 21) aufweisen, die komplementär zueinander ausgebildet und unter Einschluss einer Dehnungsfuge (22) angeordnet sind.

5. Segmentierter Wälzlagerring nach Anspruch 4, **dadurch gekennzeichnet, dass** die Dehnungsfuge (22) einen geradlinigen oder wellenförmigen Verlauf aufweist.

6. Segmentierter Wälzlagerring nach einem der Ansprüche 1 bis 5, **dadurch gekennzeichnet, dass** die streifenförmige Dichtung (13) Löcher (23) und/oder randseitige Ausnehmungen (24) aufweist, durch die sich Befestigungsschrauben (25) des mindestens einen Klemmblechs (16, 17, 18, 19) erstrecken.

7. Segmentierter Wälzlagerring nach einem der Ansprüche 1 bis 5, **dadurch gekennzeichnet, dass** das mindestens eine Klemmblech (16, 17, 18, 19) mit einem Randbereich (26) seitlich über die streifenförmige Dichtung (13) vorsteht und in dem Randbereich (26) mit dem ersten (7) und/oder zweiten Ringsegment (8) verschraubt ist.

8. Segmentierter Wälzlagerring nach einem der Ansprüche 1 bis 7, **dadurch gekennzeichnet, dass** das erste und das zweite Ringsegment (7, 8) benachbart zur Stoßfuge (10) jeweils eine außenseitige Nut (27) aufweisen, in denen das mindestens eine Klemmblech (16, 17, 18, 19) zumindest teilweise versenkt angeordnet ist.

9. Segmentierter Wälzlagerring nach einem der Ansprüche 1 bis 8, **dadurch gekennzeichnet, dass** die streifenförmige Dichtung (13) und/oder das mindestens eine Klemmblech (16, 17, 18, 19) in Richtung der Stoßfuge (10) mehrteilig ausgebildet sind.

## Claims

1. Segmented rolling bearing ring for a large rolling bearing (2) with an inner side (5) facing at least one raceway system (3) for rolling elements (4), on which at least one rolling bearing raceway (6) is provided, the rolling bearing ring (1) being divided into ring segments (7, 8, 9), which adjoin one another in the circumferential direction, forming butt joints (10) on abutting sides (11, 12), and which are sealed off from one another in the region of the butt joints (10) by means of strip-shaped seals (13, 14), **characterized in that** the butt joint (10) between a first (7) and a second (8) of the ring segments (7, 8, 9) on an outer side (15) of the rolling bearing ring (1) facing away from the inner side (5) is covered by one (13) of the strip-shaped seals (13, 14), this strip-shaped seal (13) resting with its longitudinal edge regions on both sides of the butt joint (10) on the ring segments (7, 8) on both sides of the butt joint (10) and covering the butt joint (10) with a central region and the seal (13) being clamped against the butt joint (10) by means of at least one clamping plate (16, 17, 18, 19) screwed to the first (7) and/or the second ring segment (8).

2. Segmented rolling bearing ring according to claim 1, **characterized in that** the clamping plate (16) extends over the butt joint (10) and is screwed to the first and second ring segments (7, 8) on both sides of the butt joint (10).

3. Segmented rolling bearing ring according to claim 1, **characterized in that** the clamping plate (17, 18, 19) is screwed to the first ring segment (7) only on one side of the butt joint (10) and extends at least partially over the butt joint (10).

4. Segmented rolling bearing ring according to claim 1 or 3, **characterized in that** two clamping plates (18, 19) are provided which are screwed to the first (7) and correspondingly to the second ring segment (8) and which have mutually facing edges (20, 21) which are designed complementary to one another and are arranged to include an expansion joint (22).

5. Segmented rolling bearing ring according to claim 4, **characterized in that** the expansion joint (22) has a rectilinear or undulating course.

6. Segmented rolling bearing ring according to one of claims 1 to 5, **characterized in that** the strip-shaped seal (13) has holes (23) and/or edge-side recesses (24) through which fastening screws (25) of the at least one clamping plate (16, 17, 18, 19) extend.

7. Segmented rolling bearing ring according to one of claims 1 to 5, **characterized in that** the at least one clamping plate (16, 17, 18, 19) projects laterally with an edge region (26) beyond the strip-shaped seal (13) and is screwed to the first (7) and/or second ring segment (8) in the edge region (26).

8. Segmented rolling bearing ring according to one of claims 1 to 7, **characterized in that** the first and the second ring segment (7, 8) each have an external groove (27) adjacent to the butt joint (10), in which the at least one clamping plate (16, 17, 18, 19) is arranged at least partially countersunk.

9. Segmented rolling bearing ring according to one of claims 1 to 8, **characterized in that** the strip-shaped seal (13) and/or the at least one clamping plate (16, 17, 18, 19) are formed in several parts in the direction of the butt joint (10).

## Revendications

1. Bague de roulement segmentée pour un grand palier à roulement (2) avec un côté intérieur (5) tourné vers au moins un système de chemin de roulement (3) pour des corps roulants (4), sur lequel est prévue au moins une voie de roulement de palier à roulement (6), la bague de roulement (1) étant divisée en segments de bague (7, 8, 9), qui sont adjacents l'un à l'autre dans la direction périphérique en formant des fentes de joints (10) sur des côtés de joint (11, 12) et qui sont rendus étanches l'un par rapport à l'autre dans la zone des fentes de joints (10) au moyen de joints d'étanchéité (13, 14) en forme de bande, **caractérisés en ce que** la fente de joint (10) entre un premier (7) et un deuxième (8) des segments de bague (7, 8, 9) sur un côté extérieur (15) de la bague de roulement (1) opposé au côté intérieur (5) est recouvert par l'un (13) des joints d'étanchéité (13, 14) en forme de bande, ce joint d'étanchéité (13) en forme de bande reposant par ses zones de bordure longitudinales des deux côtés de la fente de joint (10) sur les segments de bague (7, 8) et recouvre la fente de joint (10) par une zone centrale, et le joint (13) est serré contre la fente de joint (10) au moyen d'au moins une tôle de serrage (16, 17, 18, 19) vissée sur le premier (7) et/ou le deuxième segment annulaire (8).

2. Bague de roulement segmentée selon la revendication 1, **caractérisée en ce que** la tôle de serrage (16) s'étend sur la fente de joint (10) et est vissée des deux côtés de la fente de joint (10) avec le premier et le deuxième segment de bague (7, 8).

3. Bague de roulement segmentée selon la revendication 1, **caractérisée en ce que** la tôle de serrage (17, 18, 19) n'est vissée au premier segment de bague (7) que d'un côté de la fente de joint (10) et s'étend au moins partiellement sur la fente de joint (10).

4. Bague de roulement segmentée selon la revendication 1 ou 3, **caractérisée en ce qu'**il est prévu deux tôles de serrage (18, 19) qui sont vissées sur le premier segment de bague (7) et de manière correspondante sur le deuxième segment de bague (8) et qui présentent des bords (20, 21) tournés l'un vers l'autre, qui sont conçus de manière complémentaire l'un par rapport à l'autre et qui sont disposés en incluant un joint de dilatation (22).

5. Bague de roulement segmentée selon la revendication 4, **caractérisée en ce que** le joint de dilatation (22) présente un tracé rectiligne ou ondulé.

6. Bague de roulement segmentée selon l'une des revendications 1 à 5, **caractérisée en ce que** le joint d'étanchéité (13) en forme de bande présente des trous (23) et/ou des évidements (24) côté bord, à travers lesquels s'étendent des vis de fixation (25) de la au moins une tôle de serrage (16, 17, 18, 19).

7. Bague de roulement segmentée selon l'une des revendications 1 à 5, **caractérisée en ce que** l'au moins une tôle de serrage (16, 17, 18, 19) fait saillie latéralement par une zone de bord (26) au-delà du joint d'étanchéité en forme de bande (13) et est vissée dans la zone de bord (26) avec le premier (7) et/ou le deuxième segment de bague (8).

8. Bague de roulement segmentée selon l'une des revendications 1 à 7, **caractérisée en ce que** le premier et le deuxième segment de bague (7, 8) présentent chacun, au voisinage de la fente de joint (10), une rainure (27) côté extérieur, dans laquelle est disposée au moins partiellement en retrait la au moins une tôle de serrage (16, 17, 18, 19).

9. Bague de roulement segmentée selon l'une des revendications 1 à 8, **caractérisée en ce que** le joint d'étanchéité (13) en forme de bande et/ou la au moins une tôle de serrage (16, 17, 18, 19) sont réalisés en plusieurs parties dans la direction de la fente de joint (10).
